# EUROPEAN PATENT SPECIFICATION

(11) **EP 1 839 835 B1**
(45) Date of publication and mention of the grant of the patent: **17.12.2008**
(21) Application number: 07006466.2
(22) Date of filing: 29.03.2007
(51) Int. Cl.: B29C 45/14, B32B 27/30

(54) **Decorative sheets**
Dekorfolien
Feuilles décoratives

(30) Priority: 29.03.2006 JP 2006090678
(43) Date of publication of application: 03.10.2007
(73) Proprietor: DAI NIPPON PRINTING CO., LTD., Tokyo (JP)
(72) Inventor: Suga, Kazuhiro, Tokyo (JP)
(74) Representative: Gille Hrabal Struck Neidlein Prop Roos

(56) References cited:
- EP-A- 1 655 149
- JP-A- 7 081 298
- JP-A- 2002 210 907
- JP-A- 2002 240 077
- JP-A- 2004 223 755
- JP-A- 2005 186 354

## Description

### BACKGROUND OF THE INVENTION

### FIELD OF THE INVENTION

The present invention relates to decorative sheets used in interiors of buildings, interiors of fittings, interior trims of vehicles, etc., and more particularly to so-called metallic-finished decorative sheets having an excellent weather resistance.

### DESCRIPTION OF RELATED ARTS

Decorative sheets constituted of a substrate, an adhesive layer, a colored layer and a transparent resin layer have been conventionally used in various applications (for example, refer to JP 2001-232703A). Also, decorative sheets having a metallic appearance as one of design expressions are known and have been frequently used in interior trims of vehicles, system kitchens, etc.

In the case of the decorative sheets employing a so-called metallic appearance as a design expression thereof, it is generally known that high-luster pigments such as aluminum fillers and pearlescent or nacreous pigments are incorporated into the colored layer of the decorative sheet to impart a desired metallic appearance thereto.

### SUMMARY OF THE INVENTION

However, as a result of intensive and extensive studies, the present inventors have found that when employing a so called metallic appearance as a design for decorative sheets, it is difficult to produce decorative sheets having an excellent design property only by incorporating the high-luster pigments into the colored layer thereof.

More specifically, the respective high-luster pigments such as typically aluminum fillers and pearlescent or nacreous pigments are different in compatibility with a binder resin contained in the colored layer from each other. If the high-luster pigment used has a poor compatibility with the binder resin of the colored layer, it is difficult to incorporate a large amount of the high-luster pigment into the colored layer, thereby failing to attain the desired design expression.

Also, in order to incorporate an adequately sufficient amount of the high-luster pigments used for attaining a metallic appearance into the colored layer, a vinyl chloride/vinyl acetate copolymer is preferably used as a binder resin for the colored layer. However, the vinyl chloride/vinyl acetate copolymer has a poor weather resistance and therefore tends to suffer from discoloration when exposed to ultraviolet radiation, thereby failing to maintain the design as required for a long period of time.

The present invention has been made in view of the above conventional problems. A main object of the present invention is to provide a decorative sheet having a so-called metallic design appearance which is facilitated in incorporation of high-luster pigments thereinto and therefore exhibits a good reproducibility of the metallic design appearance as required, as well as has an excellent weather resistance and is therefore prevented from suffering from discoloration even when exposed to ordinary ultraviolet radiation.

To solve the above problems, the present invention provides a decorative sheet comprising a substrate, an adhesive layer, a colored layer and a transparent resin layer, wherein the colored layer contains a high-luster pigment and a binder resin comprising a vinyl chloride/vinyl acetate copolymer and an acrylic resin, and the transparent resin layer has an ultraviolet transmittance of 8% or less as measured at 380 nm.

In the preferred embodiment of the decorative sheet according to the present invention, the high-luster pigment contained in the colored layer is a scale-like aluminum filler having an average particle diameter of 5 µm or more, and a content of the high-luster pigment in the colored layer is from 10 to 40% by weight on the basis of a whole weight of the colored layer.

In the decorative sheet according to the present invention, the mixing ratio of the vinyl chloride/vinyl acetate copolymer to the acrylic resin contained as the binder resin in the colored layer is from 5:5 to 7:3 as the weight ratio.

In the decorative sheet according to the present invention, the transparent resin layer is made of an acrylic resin, and the acrylic resin contains an ultraviolet absorber in an amount of 5% by weight or less on the basis of a whole weight of the transparent resin layer.

In the decorative sheet according to the present invention, the transparent resin layer has a thickness of 70 to 150 µm.

In the decorative sheet according to the present invention, the product of the content (wt%) of the ultraviolet absorber in the transparent resin layer and the thickness (µm) of the transparent resin layer is in the range of from 100 to 250 (wt%·µm).

### EFFECT OF THE INVENTION

In the decorative sheet of the present invention, the colored layer as a constituting layer thereof contains a high-luster pigment to impart a metallic appearance to the decorative sheet. Since a vinyl chloride/vinyl acetate copolymer having a good compatibility with the high-luster pigment is used as a binder resin of the colored layer, a desired amount of the high-luster pigment can be incorporated into the colored layer. However, when the vinyl chloride/vinyl acetate copolymer is used as the binder resin, there tends to arise such a problem that the binder resin suffers from discoloration when exposed to ultraviolet radiation, i.e., is deteriorated in so-called weather resistance. In the decorative sheet of the present invention, an ultraviolet transmittance of the transparent resin layer located on a surface of the decorative sheet is adjusted to 8% or less as measured at 380 nm, so that the vinyl chloride/vinyl acetate copolymer contained in the colored layer can be prevented from suffering from discoloration even when exposed to ultraviolet radiation, etc.

Also, in the decorative sheet of the present invention, since the vinyl chloride/vinyl acetate copolymer having a good compatibility with the high-luster pigment is used as the binder resin as described above, a scale-like aluminum filler having an average particle diameter of 5 µm or more which is useful for reproducing a metallic appearance can be incorporated into the colored layer in an amount as large as from 10 to 40% by weight on the basis of a whole weight of the colored layer.

Further, in the decorative sheet of the present invention, since the mixing ratio of the vinyl chloride/vinyl acetate copolymer to the acrylic resin contained as the binder resin in the colored layer is controlled to from 5:5 to 7:3 (as the weight ratio), a desired amount of the high-luster pigment such as typically an aluminum filler can be incorporated into the colored layer, and an adhesion between the colored layer and a surface resin layer can be enhanced.

Further, in the decorative sheet of the present invention, since the transparent resin layer is made of an acrylic resin, and the acrylic resin contains an ultraviolet absorber in an amount of 5% by weight or less on the basis of a whole weight of the transparent resin layer, the vinyl chloride/vinyl acetate copolymer used for incorporating the high-luster pigment into the colored layer can be prevented from suffering from discoloration when exposed to ultraviolet radiation, etc., thereby imparting a good weather resistance to the decorative sheet as a whole.

Further, in the decorative sheet of the present invention, since the transparent resin layer has a thickness of 70 to 150 µm, the above weather resistance can be fully exhibited.

In addition, in the decorative sheet of the present invention, since a product of a content (wt%) of the ultraviolet absorber in the transparent resin layer and a thickness (µm) of the transparent resin layer is in the range of from 100 to 250 (wt%·µm), the content of the ultraviolet absorber and the thickness of the transparent resin layer can be well-balanced, thereby enabling the above effects to be fully exhibited.

### BRIEF DESCRIPTION OF THE DRAWINGS

Fig. 1 is a schematic sectional view showing an example of a layer structure of a decorative sheet according to the present invention.
Fig. 2 is a schematic sectional view showing another example of a layer structure of a decorative sheet according to the present invention.

### EXPLANATION OF REFERENCE NUMERALS

10: Decorative sheet; 11: Substrate; 12: Adhesive layer; 13: Colored layer; 14: Transparent resin layer; 20: High-luster pigment; 30: Ultraviolet absorber

### DETAILED DESCRIPTION OF THE INVENTION

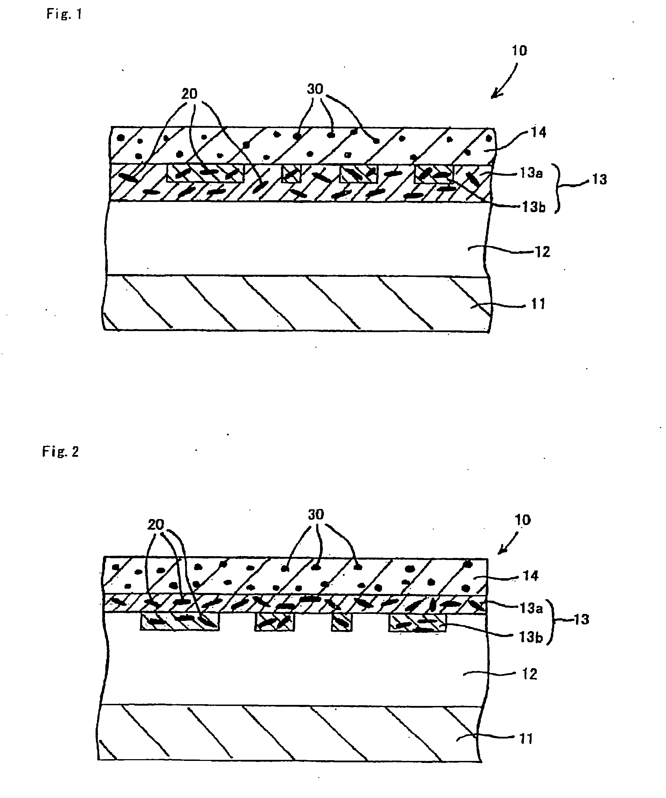

The decorative sheet according to the present invention is explained by referring to accompanying drawings in which Fig. 1 is a schematic sectional view showing an example of a layer structure of a decorative sheet according to the present invention; and Fig. 2 is a schematic sectional view showing another example of a layer structure of a decorative sheet according to the present invention.

As shown in Figs. 1 and 2, the decorative sheet 10 of the present invention has a layer structure obtained by successively laminating a substrate 11, an adhesive layer 12, a colored layer 13 composed of a solid colored layer 13a and a pattern colored layer 13b, and a transparent resin layer 14. Meanwhile, such a layer structure may be completed, for example, by printing the colored layer 13 on the transparent resin layer 14 and then bonding the thus obtained laminate onto the substrate 11 through the adhesive layer 12.

In the followings, the respective components of the decorative sheet according to the present invention are explained.

### (Substrate)

The substrate 11 is an essential component of the decorative sheet according to the present invention, and serves as a base for the decorative sheet.

Examples of the material used for the substrate 11 include polyolefin-based resins, ABS resins, polycarbonate resins, polyester-based resins, acrylic resins and polyvinyl chloride resins. Among these resins, preferred are polyolefin-based resins and polyester-based resins. These resin materials are free from generation of chlorine-based gases when subjecting the decorative sheet produced therefrom to incineration for disposal and, therefore, exhibit a high safety and are preferably used from the environmental viewpoints. Further, among them, colored polyolefin-based resins are more preferably used. When the substrate is made of such a colored polyolefin-based resin, a stable color tone of the pattern colored layer 13b formed on a surface of the decorative sheet can be ensured. In addition, even when a surface of a supporting plate as an adherend to which the decorative sheet of the present invention is attached, has an uneven hue, the surface of the supporting plate with such an uneven hue may be well concealed.

Specific examples of the polyolefin-based resins include high crystalline non-elastomeric polyolefin-based resins such as polyethylene (low-density or high-density polyethylene), polypropylene, polymethyl pentene, polybutene, ethylene-propylene copolymers and propylene-butene copolymers; and various olefin-based thermoplastic elastomers. As the olefin-based thermoplastic elastomers, there may be used, for example, the following compounds (1) to (7).
(1) Soft polypropylene as described in JP 6-23278B which is made of a mixture of (A) 10 to 90% by weight of a boiling heptane-soluble atactic polypropylene as a soft segment having a number-average molecular weight of 25,000 or more and a ratio of a weight-average molecular weight (Mw) to a number average molecular weight (Mn) of 7 or less (Mw/Mn ≤ 7); and (B) 90 to 10% by weight of a boiling heptane-insoluble isotactic polypropylene as a hard segment having a melt index of 0.1 to 4 g/10 min. Among the olefin-based thermoplastic elastomers of the above type, a mixture containing the isotactic polypropylene and the atactic polypropylene at such a weight ratio that the' atactic polypropylene is present in an amount of 5 to 50% by weight, is hardly susceptible to so-called "necking", and is therefore suitable for molding under heating and pressure for obtaining products having various shapes as well as embossing.
   The polypropylene-based thermoplastic elastomers themselves are already conventionally known. In the conventionally known applications such as packaging containers, in order to attain a sufficient strength of the products, there have been exclusively used such thermoplastic elastomers in which a weight ratio of the atactic polypropylene as a soft segment is less than 5% by weight. However, the polypropylene-based thermoplastic elastomers tend to suffer from the necking as described above when used in novel applications such as V-cutting and molding for forming molded articles having a three-dimensional shape or an irregular surface shape, resulting in failed processing of the thermoplastic elastomers. Therefore, in contrast to the above conventional composition, in the present invention, the weight ratio of the atactic polypropylene in the thermoplastic elastomers is controlled to 5% by weight or more, so that the resultant polypropylene-based thermoplastic elastomers can be prevented from suffering from uneven sheet deformation owing to the necking as well as wrinkles and distorted patterns when subjected to the V-cutting or molding for forming molded articles having a three dimensional shape or an irregular surface shape. In particular, more preferred are those polypropylene-based thermoplastic elastomers in which the weight ratio of the atactic polypropylene is 20% by weight or more. On the other hand, when the weight ratio of the atactic polypropylene becomes too large, the obtained sheet itself tends to be readily deformed and suffer from sheet deformation and distorted patterns when passing the sheet through a printing machine, as well as tends to undergo problems such as defective registering upon multi-color printing. Further, such a sheet tends to be broken upon molding. The upper limit of the weight ratio of the atactic polypropylene in the polypropylene-based thermoplastic elastomers is preferably 50% by weight or less and more preferably 40% by weight or less when printing a decorative layer, etc., thereon using an ordinary rotary press such as a rotary gravure press or when subjecting the sheet to embossing, vacuum forming, V-cutting, simultaneous lamination by injection molding, etc.
(2) Thermoplastic elastomers made of ethylene-propylene-butene copolymer resins. In the thermoplastic elastomers, as the butene, there may be used any of three kinds of structural isomers including 1-butene, 2-butene and isobutene. The copolymers may be in the form of a random copolymer partially containing an amorphous structure. Specific examples of the preferred ethylene-propylene-butene copolymer resins include the following copolymers (i) to (iii).
   (i) Random copolymers as described in JP 9-111055A which are in the form of a terpolymer of ethylene, propylene and butene. The weight ratio between the monomer components in the terpolymer is controlled such that the propylene content therein is 90% by weight or more. The terpolymer preferably has a melt flow rate of 1 to 50 g/10 min as measured at 230°C under a load of 2.16 kg. More preferred are those obtained by melt-kneading 100 parts by weight of such a random terpolymer with 0.01 to 50 parts by weight of a transparent nucleating agent containing a phosphoric aryl ester compound as a main component and 0.003 to 0.3 part by weight of an aliphatic acid amide having 12 to 22 carbon atoms.
   (ii) Copolymers as described in JP 5-77371A which are in the form of a terpolymer of ethylene, propylene and 1-butene, and are produced by adding 80 to 0% by weight of a crystalline polypropylene to 20 to 100% by weight of an amorphous polymer having a propylene content of 50% by weight or more.
   (iii) Copolymers as described in JP 7-316358A which are in the form of a terpolymer of ethylene, propylene and 1-butene, and are produced by adding 0.5% by weight of an oil gelling agent such as an amine salt of N-acryl amino acid and a N-acryl amino acid ester to a composition prepared by mixing 80 to 0% by weight of a crystalline polyolefin such as isotactic polypropylene with 20 to 100% by weight of a low-crystalline polymer having a propylene and/or 1-butene content of 50% by weight or more.
   Meanwhile, the ethylene-propylene-butene copolymer resins may be used solely or in the form of a mixture prepared by mixing the respective copolymers (i) to (iii) as described above with other polyolefin-based resins, if required.
(3) Olefin-based elastomers as described in JP 53-21021B which are prepared by uniformly blending and mixing (A) an olefin polymer (crystalline polymer) as hard segment such as polyethylene, polypropylene and polymethyl pentene and (B) a monoolefin copolymer rubber as a soft segment such as partially crosslinked ethylene-propylene copolymer rubbers and unsaturated ethylene-propylene-non-conjugated diene terpolymer rubbers, with each other. Meanwhile, in the olefin-based elastomers, a mixing ratio (weight ratio) of the monoolefin copolymer rubber to the olefin polymer (monoolefin copolymer rubber /olefin polymer) is from 50/50 to 90/10.
(4) Olefin-based elastomers as described in JP 53-34210B which are prepared by mixing (B) an uncrosslinked monoolefin copolymer rubber as a soft segment, (A) an olefin-based copolymer (crystalline polymer) as a hard segment, and a crosslinking agent with each other and then dynamically subjecting the resultant mixture to partial crosslinking reaction while applying a shear force thereto under heating. Meanwhile, the weight ratio of the monoolefin copolymer rubber (B) to the olefin-based copolymer (A) (monoolefin copolymer rubber (B)/olefin-based copolymer (A)) is from 60/40 to 80/20.
(5) Olefin-based elastomers as described in JP 56-15741B which are prepared by mixing (A) a peroxide-decomposable olefin polymer as a hard segment which are capable of undergoing reduction in molecular weight and increase in fluidity when mixed with a peroxide and then heated, such as isotactic polypropylenes, propylene-ethylene copolymers and propylene-butene-1 copolymers, (B) a peroxide-crosslinkable monoolefin polymer rubber as a soft segment which are capable of being crosslinked and undergoing reduction in fluidity when mixed with a peroxide and then heated, such as ethylene-propylene copolymer rubbers, ethylene-propylene-non-conjugated diene terpolymer rubbers, (C) a peroxide-non-crosslinkable hydrocarbon rubber as both a soft segment and a fluidity modifying component which are incapable of being crosslinked and are free from change in fluidity when mixed with a peroxide and then heated, such as polyisobutylene and butyl rubbers, and (D) a mineral oil-based softening agent such as paraffin-based compounds, naphthene-based compounds and aromatic compounds, with each other, and then subjecting the resultant mixture to dynamic heat treatment in the presence of an organic peroxide. Meanwhile, the above olefin-based elastomers are formulated by blending 100 parts by weight of a mixture of the components (A) and (B) which is composed of 90 to 40 parts by weight of the component (A) and 10 to 60 parts by weight of the component (B) with 50 to 100 parts by weight of the component (c) and/or the component (D).
(6) Olefin-based thermoplastic elastomers as described in JP 2-139232A which are made of ethylene-styrene-butylene copolymers.
(7) Olefin-based thermoplastic elastomers produced from the above compounds (1) to (6) by introducing a hydroxyl group and/or a carboxyl group as a polar group thereinto. Examples of such olefin-based thermoplastic elastomers include olefin-based thermoplastic elastomers produced by graft-polymerizing an ethylene-vinyl alcohol copolymer, etc., to the above compounds (1) to (6) to thereby introduce a hydroxyl group thereinto, and olefin-based thermoplastic elastomers produced by introducing a carboxyl group into the above compounds (1) to (6) using a copolymer of maleic acid, fumaric acid, itaconic acid, etc. The olefin-based thermoplastic elastomers may contain one or both of a hydroxyl group and a carboxyl group. These polar groups exhibit the effect of enhancing an adhesion of the substrate to other layers including a decorative layer such as a pattern printed layer, and an adhesive layer.

The film made of these polyolefin-based resins may be in the form of either a stretched film or an unstretched film. Among these films, preferred is the unstretched film. The unstretched film exhibits a good flexibility and is excellent in processability upon lapping, V-cutting, vacuum forming, simultaneous lamination by injection molding, etc., as well as shrinkage percentage upon heating. Therefore, the polyolefin-based resin unstretched film can be suitably used as the substrate 11.

Example of the acrylic resins as the material for the substrate include resins made of homopolymers or copolymers containing a (meth)acrylic ester as a constitutional unit such as polymethyl (meth)acrylate, polyethyl (meth)acrylate, polypropyl (meth)acrylate, polybutyl (meth)acrylate, methyl (meth)acrylate-butyl (meth)acrylate copolymers, ethyl (meth)acrylate-butyl (meth)acrylate copolymers, ethylene-methyl (meth)acrylate copolymers and styrene-methyl (meth)acrylate copolymers. Meanwhile, the term "(meth)acrylic" used herein means "acrylic", "methacrylic" or both thereof. These acrylic resins may be used singly or in the form of a mixture of any two or more thereof. Further, the substrate 11 may have either a single layer structure or a two or more laminated layer structure.

Example of the polyester-based resins as the material for the substrate include thermoplastic polyester resins such as polyethylene terephthalate, polybutylene terephthalate, ethylene terephthalate-isophthalate copolymers and polyarylates.

The above materials for the substrate 11 may also contain, if required, various additives such as a colorant, a filler, a foaming agent, a flame retardant, a lubricant, an antioxidant, an ultraviolet absorber and a light stabilizer.

The colorant used as the additive serves for imparting a hue required as a decorative sheet to the substrate 11. The colorant may be suitably selected according to the applications for tinting the substrate 11 with a chromatic transparent color or a chromatic opaque color. In general, since it is required to conceal a surface of an adherend to which the decorative sheet is attached, the substrate 11 is preferably tinted with a chromatic opaque color using the colorant. Examples of the colorant include inorganic pigments such as titanium white, zinc white, iron oxide red, vermilion, ultramarine blue, cobalt blue, titan yellow and carbon black; organic pigments or dyes such as isoindolinone, Hansa yellow A, quinacridone, permanent red 4A and phthalocyanine blue; metallic pigments made of foils or powders of aluminum, brass, etc.; and pearlescent or nacreous pigments made of foils or powders of titanium dioxide-coated mica, basic zinc carbonate, etc. Also, if required, an inorganic filler may be further added to the substrate. Examples of the inorganic filler include powders of calcium carbonate, barium sulfate, clay, talc, silica (silicon dioxide) and alumina (aluminum oxide). The amount of the colorant added is usually from about 1 to about 50 parts by weight on the basis of 100 parts by weight of the above resin material for the substrate 11.

The substrate 11 may be produced by forming the above resin material into a sheet by a film-forming method such as a calendering method, an inflation method and a T-die extrusion method.

The thickness of the thus formed substrate 11 may be optionally determined depending upon applications of the decorative sheet or properties required therefor. The substrate has, for example, a thickness of about 200 to about 700 µm.

The thus formed substrate 11 may be subjected to surface treatments such as corona discharge treatment, plasma treatment and ozone treatment to improve an adhesion property thereof. When subjected to such surface treatments, the obtained substrate 11 can be enhanced in adhesion to the below-mentioned adhesive layer 12.

### (Adhesive Layer)

The adhesive layer 12 is also an essential layer for the decorative sheet according to the present invention. As shown in Figs. 1 and 2, the adhesive layer 12 is provided between the substrate 11 and the colored layer 13 and serves as a primer layer or an anchor layer for enhancing an adhesion between the substrate 11 and the transparent resin layer 14 provided thereon with the colored layer 13. The adhesive layer 13 has the effects of enhancing a durability of the decorative sheet and keeping a good appearance thereof for a long period of time. These effect of the adhesive layer 12 are extremely effective to maintain patterns formed in the decorative sheet for a long period of time.

The adhesive layer 12 is formed from a coating material composed of a resin composition, a solvent and other additives. Examples of the solvent include water-insoluble organic solvents such as toluene, xylene, ethyl acetate, butyl acetate, methyl ethyl ketone, methyl isobutyl ketone, ethylene glycol monomethyl ether and ethylene glycol monoethyl ether; water-soluble organic solvents such as methanol, ethanol, isopropyl alcohol and n-propyl alcohol; water; and mixed solvents thereof, though not particularly limited thereto. Meanwhile, the coating material for the adhesive layer 12 may also be in the form of a solvent-free coating material. Such a solvent-free coating material is suitably used from environmental viewpoints.

Examples of the resin composition include rubber-based resins, acrylic resins, epoxy-based resins and urethane-based resins. Of these resins, preferred are urethane-based resins. When using the urethane-based resins for the adhesive layer, an adhesion strength between the layers become stronger, thereby enabling production of a decorative sheet having an excellent flexibility.

The urethane-based resins may be made of polyurethane produced from a polyol (polyhydric alcohol) as a main agent and an isocyanate as a crosslinking agent (curing agent).

As the polyol, there may be used those polyols having two or more hydroxyl groups in a molecule thereof. Specific examples of the polyol include polyethylene glycol, polypropylene glycol, butylene glycol, neopentyl glycol, 1,6-hexanediol, acrylic polyols, polyester-polyols and polyether polyols.

In the present invention, as the isocyanate, there may be used ordinary isocyanates which are conventionally used for production of polyurethanes. Examples of the isocyanate include aliphatic polyisocyanates such as trimethylene diisocyanate, tetramethylene diisocyanate, hexamethylene diisocyanate, pentamethylene diisocyanate, lysine ester triisocyanate, 1,4,8-triisocyanatooctane, 1,3,6-triisocyanatohexane and 2,5,7-trimethyl-1,8-diisocyanato-5-isocyanato-methyl octane; alicyclic polyisocyanates such as 1,3-dicyclopentene diisocyanate, 1,4-cyclohexane diisocyanate, 1,3-cyclohexane diisocyanate, 3-isocyanato-methyl-3,5,5-trimethylcyclohexyl isocyanate (popular name: isophorone diisocyanate), 1, 3, 5-triisocyanato-cyclohexane, 1, 3, 5-trimethylisocyanato-cyclohexane and 2-(3-isocyanatopropyl)-2,5-di(isocyanatomethyl)-bicyclo(2,2,1)heptane; aromatic aliphatic polyisocyanates such as 1,3- or 1,4-xylylene diisocyanate and mixtures thereof, 1,3- or 1,4-bis(1-isocyanato-1-methylethyl)benzene and 1,3,5-triisocyanatomethylbenzene; aromatic polyisocyanates such as m-phenylene diisocyanate, p-phenylene diisocyanate, triphenylmethane-4,4',4"-triisocyanate and 4,4'diphenylmethane-2,2',5,5'-tetraisocyanate; and derivatives of these polyisocyanates. These polyisocyanates may be used in combination of any two or more thereof. Of these polyisocyanates, preferred are aliphatic polyisocyanates, alicyclic polyisocyanates, aromatic aliphatic polyisocyanates and derivatives of these polyisocyanates. These polyisocyanates are excellent in safety, hygienic property and weather resistance.

The coating material (adhesive) of a solvent type for the adhesive layer 12 is prepared by adding a resin composition, if required, together with other additives, to a solvent and then subjecting the obtained mixture to dissolution, dispersion and mixing by known methods.

The adhesive layer 12 is formed by applying the thus prepared coating material (adhesive) for the adhesive layer 12 onto the substrate 11 and then drying and curing the resultant coating layer. The coating material may be applied onto the substrate by various known methods such as, for example, roll coating, gravure coating, air-knife coating and Komma coating. Of these coating methods, preferred are gravure coating and Komma coating from the viewpoint of a good productivity.

Upon forming the adhesive layer 12, the coating material is applied such that an amount of the obtained coating layer after dried is from about 1 to about 20 g/m² and preferably from about 2 to about 10 g/m². When the amount of the coating layer after dried is less than 1 g/m², it tends to be difficult to attain the leveling effect of flattening the irregular surface of the below mentioned colored layer 13, and the resultant decorative sheet tends to be deteriorated in adhesion strength between the respective layers. On the other hand, when the amount of the coating layer after dried is more than 20 g/m², a large amount of the solvent tends to remain in the resultant sheet, so that the sheet tends to suffer from foaming owing to heat generated when subjected to vacuum forming, etc., resulting in poor design property (occurrence of so-called orange peel).

### (Colored Layer)

The colored layer 13 is also an essential layer for the decorative sheet of the present invention, and is constituted from a solid colored layer 13a and/or a pattern colored layer 13b.

The solid colored layer 13a is provided for concealing a surface texture of the substrate 11, and usually is formed from a patternless whole solid colored layer. On the other hand, the pattern colored layer 13b has desired patterns or colors formed by figures, characters, symbols, hues or combination thereof, and is formed as a flat layer, an irregular layer or a convex layer (refer to Fig. 2) on a surface of the solid colored layer 13a. Meanwhile, the pattern colored layer 13b may also have a function as the solid colored layer 13a. In addition, the colored layer 13 may be formed from the solid colored layer 13a solely or the pattern colored layer 13b solely.

In the decorative sheet of the present invention, as shown in Fig. 1, the colored layer 13 may be constituted from the solid colored layer 13a and the pattern colored layer 13b in which after forming the pattern colored layer 13b on the transparent resin layer 14, the solid colored layer 13a may be formed so as to cover the pattern colored layer 13b. Alternatively, as shown in Fig. 2, after forming the solid colored layer 13a on the transparent resin layer 14, the pattern colored layer 13b may be formed thereon. In this case, the solid colored layer 13a may be either colorless or tinted with a colorant. However, it is required that the solid colored layer 13a has at least a transparency so as to allow patterns of the pattern colored layer 13b to be viewed from outside there through.

The decorative sheet 10 of the present invention is characterized in that at least one of the solid colored layer 13a and the pattern colored layer 13b contains a high-luster pigment 20. The high-luster pigment 20 serves for imparting a so-called metallic appearance to products using the decorative sheet 10.

The high-luster pigment 20 used in the decorative sheet 10 of the present invention is not particularly limited, and any suitable high-luster or high-brightness pigments may be used in the present invention. This is because freedoms of selection of materials and contents of the high-luster pigment used are increased since the vinyl chloride/vinyl acetate copolymer having a very good compatibility with the high-luster pigment is used as the binder resin for the colored layer 13.

Specific examples of the high-luster pigment include an aluminum filler and various pearlescent or nacreous pigments as well as pigments obtained by vapor-depositing aluminum on desired particles and particles obtained by vapor-depositing aluminum or silver on a film and then pulverizing the deposited film.

The size and shape of the high-luster pigment 20 used in the present invention are not particularly limited, and may be optionally determined. For example, the high-luster pigment made of the aluminum filler preferably has an average particle diameter of 5 µm or more and a scale-like shape. When using the aluminum filler having such size and shape as the high-luster pigment, a highly-designed metallic appearance can be reproduced. Meanwhile, the average particle diameter of the scale-like aluminum filler means an average value of longest diameters of scale-like particles. The upper limit of the average particle diameter of the aluminum filler used in the present invention is not particularly limited. However, when the average particle diameter of the aluminum filler exceeds 30 µm, the resultant sheet tends to be deteriorated in interlaminar strength. Therefore, the average particle diameter of the aluminum filler is preferably 30 µm or less and more preferably 25 µm or less.

Further, in the present invention, the content of the high-luster pigment 20 in the colored layer is not particularly limited, and may be suitably determined according to a desired design thereof. For example, the above aluminum filler used as the high-luster pigment may be contained in an amount of 10 to 40% by weight on the basis of a whole weight of the colored layer. When the content of the scale-like aluminum filler is controlled to the above range, it is possible to reproduce a real metallic appearance. Meanwhile, in the present invention, a good reproduction of the metallic appearance can be achieved by such an effect that since the vinyl chloride/vinyl acetate copolymer having a very good compatibility with the high-luster pigment is used as the binder resin for the colored layer 13, a large amount of the scale-like aluminum filler having a large diameter can be incorporated into the colored layer.

In addition, the colored layer 13 constituting the decorative sheet of the present invention is formed from a coating material for the colored layer 13 which contains the binder resin as a main-component as well as a solvent and other additives. The coating material may be in the form of either a water-based coating material using water and/or a water-soluble organic solvent, or a solvent-based coating material using a water-insoluble organic solvent. Meanwhile, as the coating material for the colored layer 13, in addition to the coating materials of the above type using the solvent, there may also be used a solvent-free coating material.

When the colored layer 13 is formed from the water-based coating material, the resultant decorative sheet is free from bleeding-out of organic solvents with the passage of time. For example, even if the decorative sheet is used as an interior material for buildings such as houses, there is no fear that the organic solvent bled out therefrom is released in room and adversely affects human health.

In the decorative sheet 10 of the present invention, even when any of the water-based coating material and the solvent-based coating material is used for forming the colored layer 13, the binder resin used therein is a mixed resin composed of the vinyl chloride/vinyl acetate copolymer and the acrylic resin. Therefore, since such a mixed resin has a good compatibility with the high-luster pigment, a large amount of the high-luster pigment can be incorporated thereinto, thereby enabling a highly-designed metallic appearance to be reproduced.

The mixing ratio between the vinyl chloride/vinyl acetate copolymer and the acrylic resin in the binder resin is from 5:5 to 7:3. A desired amount of the high-luster pigment such as typically an aluminum filler can be incorporated into the colored layer, and an adhesion between the colored layer and a surface resin layer can be enhanced.

Meanwhile, upon preparation of the water-based coating material, the mixed resin composed of the vinyl chloride/vinyl acetate copolymer and the acrylic resin may be conditioned into an aqueous state by any suitable methods such as dissolution, emulsification, microcapsulation and other methods.

As the solvent for the water-based coating material, there may be used water and water-soluble organic solvents such as alcohols. As the water, there may be used ordinary industrial waters. Also, as the solvent for the water-based coating material, there may also be used a mixed solvent composed of water and the water-soluble organic solvent such as alcohols. Such a mixed solvent may be prepared by mixing water with lower alcohols such as methanol, ethanol, isopropyl alcohol and n-propyl alcohol, glycols or esters thereof. Meanwhile the content of the lower alcohols, glycols or esters thereof in the mixed solvent is preferably from about 5 to about 20% by weight. The lower alcohols, glycols or esters thereof as the solvent are used for the purposes of improving a fluidity of an ink as the coating material, and enhancing a wettability of the ink against the substrate to be printed therewith as well as controlling a drying property thereof, and the kinds and amounts of the lower alcohols, glycols or esters thereof used may be determined according to these purposes.

On the other hand, the solvent for the solvent-based coating material is not particularly limited. Examples of the solvent for the solvent-based coating material include water-insoluble organic solvents such as toluene, xylene, ethyl acetate, butyl acetate, methyl ethyl ketone, methyl isobutyl ketone, ethylene glycol monomethyl ether and ethylene glycol monoethyl ether, and mixed solvents thereof.

In the water-based coating material and the solvent-based coating material, there may be used common additives. Examples of the additives include the above high-luster pigment 20 and other pigments (also referred to as a colorant or a coloring pigment), waxes, dispersants, defoaming agents, leveling agents, stabilizers, fillers, lubricants and slip agents.

As the coloring pigment, there may be used ordinary organic or inorganic pigments. Examples of yellow pigments include organic pigments such as azo-based pigments such as monoazo compounds, disazo compounds and polyazo compounds, and isoindolinone; and inorganic pigments such as chrome yellow, yellow iron oxide, cadmium yellow, titan yellow and antimony yellow. Examples of red pigments include azo-based pigments such as monoazo compounds, disazo compounds and polyazo compounds, and quinacridone; and inorganic pigments such as iron oxide red, vermilion, cadmium red and chrome vermilion. Examples of blue pigments include organic pigments such as phthalocyanine blue and indanthrene blue; and inorganic pigments such as Berlin blue, ultramarine blue and cobalt blue. Examples of black pigments include organic pigments aniline black; and inorganic pigments such as carbon black. Examples of white pigments include inorganic pigments such as titanium dioxide, zinc white and antimony trioxide.

The coating material of a solvent type for the colored layer 13 is prepared by adding a resin composition, if required, together with other additives, to a solvent and then subjecting the obtained mixture to dissolution, dispersion and mixing by known methods.

The colored layer 13 is formed by applying the coating material for the colored layer 13 by a coating or printing method, and then drying and curing the resultant coating or printed layer. The solid colored layer 13a is formed by coating or printing whereas the pattern colored layer 13b is usually formed by printing. The coating material for the colored layer 13 may be coated by various known methods such as, for example, roll coating, curtain flow coating, wire bar coating, reverse coating, gravure coating, gravure reverse coating, air-knife coating, kiss-roll coating, blade coating, smooth coating, Komma coating, spray coating, cast coating and brush coating usually in an amount capable of providing a coating layer having a thickness of about 1.0 to about 10.0 µm upon drying. Also, the coating material for the colored layer 13 may be printed by various known methods including letterpress printing such as gravure printing, typographic printing and flexographic printing, lithographic printing such as lithographic offset printing and di-litho printing, stencil printing such as silk screen printing, electrostatic printing, ink-jet printing, transfer printing using a transfer sheet, etc., as well as handwriting. The coating material for the colored layer 13 is usually applied in an amount capable of providing a coating layer having a thickness of about 1.0 to about 10.0 µm upon drying.

### (Transparent Resin Layer)

The transparent resin layer 14 is also an essential layer for the decorative sheet 10 of the present invention. The transparent resin layer 14 is formed for the purposes of not only protecting the colored layer 13 against occurrence of scores or scratches, enhancing a surface strength of the decorative sheet 10 and imparting a good painting feel to the sheet but also preventing an ultraviolet ray from penetrating therethrough to thereby avoid discoloration of the vinyl chloride/vinyl acetate copolymer used in the underlying colored layer 13. Therefore, the transparent resin layer 14 is required to have an ultraviolet transmittance of 8% or less as measured at 380 nm.

The resin for the transparent resin layer 14 include acrylic resins. Further, other resins can be used with the acrylic resins, to the extent that the effect of the present invention is not impaired by such other resins. As the other resins for transparent resin layer 14, there may also be used the same resin materials as those used for the above substrate 11.

As described above, in the present invention, the transparent resin layer 14 is required to have an ultraviolet transmittance of 8% or less as measured at 380 nm. In order to achieve such an ultraviolet transmittance of the transparent resin layer 14, it is preferred that the resin materials used therefor preferably contain an ultraviolet absorber 30.

The ultraviolet absorber 30 used in the transparent resin layer 14 is not particularly limited, and may be either inorganic or organic. Examples of the preferred inorganic ultraviolet absorber include particles of titanium dioxide, cerium oxide, zinc oxide, etc., which have an average particle diameter of about 5 to about 120 nm. Examples of the organic ultraviolet absorber include benzotriazole-based compounds. Specific examples of the organic ultraviolet absorber include 2-(2-hydroxy-5-t-octylphenyl)benzotriazole, 2-(2-hydroxy-5-methylphenyl)benzotriazole, 2-(2- hydroxy- 3, 5-di-tert-amylphenyI)benzotriazole, and 3-[3-(benzotriazol-2-yl)-5-tert-butyl-4-hyclxoxyphenyl]propionic acid ester of polyethylene glycol. Further, there may also be used benzophenone-based compounds as well as reactive ultraviolet absorbers containing a polymerizable group such as a (meth)acryloyl group in a molecule thereof.

Meanwhile, when the content of the ultraviolet absorber is too large, the resultant transparent resin layer tends to be undesirably colored yellow, or the ultraviolet absorber tends to be bled out from the transparent resin layer. Therefore, the content of the ultraviolet absorber in the transparent resin layer 14 is preferably adjusted to 5% or less, and more preferably adjusted to 3% or less.

The lower limit of the amount of the ultraviolet absorber is not particularly limited depending on the sort of the ultraviolet absorber and within the ultraviolet transmittance of 8% or less as measured at 380 nm is achieved. Usually, the amount of the ultraviolet absorber is preferably 0.5 % by weight or more, and more preferably 1.0 % by weight or more.

Among the above ultraviolet absorbers, when the benzotriazole- based ultraviolet absorbers are used in an amount of 1% by weight on the basis of the whole weight of the resin materials, the obtained transparent resin layer can exhibit an ultraviolet transmittance as low as 4%.

Meanwhile, the ultraviolet transmittance used herein is a value measured by a spectrophotometer "UV-2400" available from Hitachi Limited.

Further, the transparent resin layer 14 constituting the decorative sheet of the present invention may also contain, in addition to the above ultraviolet absorbers, various known additives such as colorants, fillers, light stabilizers, matting agents, antioxidants and anti-blocking agents, if required.

The transparent resin layer 14 may be formed by various lamination methods such as dry lamination and heat lamination or by coating a resin by an extrusion method, or may also be formed by other known methods.

Also, in order to further improve a dimensional stability, a strength and a crystallinity of the transparent resin layer 14, the film used therefore may be subjected to stretching upon production thereof, or may be subjected to coating with a primer agent for enhancing an adhesion property thereof as well as corona discharge treatment, etc.

The thickness of the transparent resin layer 14 is usually from about 10 to about 500 µm, preferably from about 30 to about 300 µm and more preferably from 70 to 150 µm.

The surface of the transparent resin layer 14 may also be shaped by embossing. By forming such embossed patterns on the transparent resin layer 14, the resultant decorative sheet can be enhanced in design property. The kinds of embossed patterns to be formed on the transparent resin layer are not particularly limited, and may be selected according to the applications of the resultant decorative sheet. Also, in order to impart a good sharpness to the surface of the decorative sheet, the transparent resin layer 14 may be pressed by a mirror finished roll to further enhance a surface smoothness thereof.

Meanwhile, the transparency of the transparent resin layer used in the present invention is not strictly defined, and is sufficient if the resin layer is substantially transparent. The transparent resin layer having a slight cloudiness or a slight opaque feel may also be usable in the present invention.

In addition, in the transparent resin layer used in the present invention, a product of the content (wt%) of the above ultraviolet absorber in the transparent resin layer and the thickness (µm) of the transparent resin layer is preferably in the range of from 100 to 250 (wt%·µm) to attain a good balance between the thickness of the transparent resin layer and the amount of the ultraviolet absorber contained therein. More specifically, for example, when the content of the ultraviolet absorber in the transparent resin layer is from 1 to 2% by weight, the thickness of the transparent resin layer is preferably about 125 µm. When the content of the ultraviolet absorber in the transparent resin layer is 3% by weight, the thickness of the transparent resin layer is preferably about 75 µm, and further when the content of the ultraviolet absorber in the transparent resin layer is from 4 to 5% by weight, the thickness of the transparent resin layer is preferably about 50 µm.

### EXAMPLES

The present invention will be described in more detail by referring to the following examples and comparative examples.

### EXAMPLE 1

As the decorative sheet of Example 1 according to the present invention, there was produced the decorative sheet having such a layer structure as shown in Fig. 1. Specific procedures were as follows.

A 400 µm-thick polyolefin resin sheet was used as a substrate.

A 125 µm-thick acrylic resin sheet was used as a transparent resin layer. The acrylic resin constituting the transparent resin layer contained 2-(2-hydroxy-5-t-octylphenyl)benzotriazole as an ultraviolet absorber in an amount of 2% by weight on the basis of the whole weight of the resin layer. The ultraviolet transmittance of the transparent resin layer was 2% as measured at 380 nm.

As the binder resin for the colored layer, there was used a mixture of a vinyl chloride/vinyl acetate copolymer and an acrylic resin in-which a mixing ratio of the vinyl chloride/vinyl acetate copolymer to the acrylic resin (vinyl chloride/vinyl acetate copolymer/acrylic resin) was adjusted to 5:5. In addition, the colored layer contained a pigment "7600 Series" available from Toyo Aluminum Co., Ltd., as a high-luster pigment in an amount of 20% by weight. Meanwhile, the whole thickness of the colored layer was 5 µm.

As the adhesive for the adhesive layer, there was used a two-part liquid type curable urethane-based adhesive, and the adhesive was applied in an amount of 10 g/m as measured after drying.

The decorative sheet of Example 1 having the above structure was evaluated for (1) initial color tone and appearance; (2) initial adhesion; (3) color tone and appearance after subjected to weather resistance test; and (4) adhesion after subjected to weather resistance test, respectively. Meanwhile, the color tone and appearance were evaluated by observing the sheet by naked eyes. The adhesion was evaluated by a cross-cut method according to JIS X5600-5-6. In addition, the weather resistance test was conducted using an accelerated weather resistance tester.

Main parameters of the decorative sheet of Example 1 as well as the results of evaluation of the above items (1) to (4) are shown in the following Table 1.

### EXAMPLES 2 AND 3 AND COMPARATIVE EXAMPLES 1 TO 5

Decorative sheets of Examples 2 and 3 and decorative sheets of Comparative Examples 1 to 5 were produced by the same method as used for producing the decorative sheet of Example 1, and subjected to the same evaluation procedures as those for the decorative sheet of Example 1. Main parameters of the decorative sheets of Examples 2 and 3 and Comparative Example 1 to 5 as well as the results of evaluation of the above items (1) to (4) are also shown in the following Table 1. Meanwhile, parameters other than the main parameters of Examples 2 and 3 and Comparative Example 1 to 5 which are not shown in Table-1 all are the same as those of the decorative sheet of Example 1.

**TABLE 1**

| | Examples | | | Comparative Examples | | | | |
|---|---|---|---|---|---|---|---|---|
| | 1 | 2 | 3 | 1 | 2 | 3 | 4 | 5 |
| Main parameters | | | | | | | | |
| Thickness of transparent resin layer (µm) | 125 | 125 | 75 | 125 | 125 | 125 | 125 | 75 |
| Content of ultraviolet absorber (wt%) | 2 | 1.5 | 1.5 | 2 | 2 | 0.4 | 5 | 1 |
| Ultraviolet transmittance (%) at 380 nm | 2 | 4 | 8 | 2 | 2 | 18 | 0.5 | 10 |
| Mixing ratio of vinyl chloride/vinyl acetate copolymer to acrylic resin | 5:5 | 7:3 | 5:5 | 8:2 | 3:7 | 5:5 | 5:5 | 7:3 |
| Evaluation results | | | | | | | | |
| (1) Initial color tone and appearance | A | A | A | A | A | A | B | A |
| (2) Initial adhesion | A | A | A | A | B | A | A | A |
| (3) Color tone and appearance after weather resistance test | A | B | B | C | B | D | B | D |
| (4) Adhesion after weather resistance test | A | B | B | B | D | D | B | C |

| | | | | | | | | |
|---|---|---|---|---|---|---|---|---|
| Note: The ratings used for the respective evaluation procedures are as follows: (1) Initial color tone and appearance: A: Good; B: Poor (2) Initial adhesion: A: Good; B: Delamination occurred (3) Color tone and appearance after weather resistance test: A: Excellent; B: Good; C: Slight yellow discoloration; D: Severe yellow discoloration (4) Adhesion after weather resistance test: A: Excellent; B: Good; C: Partial delamination occurred; D: Severe delamination occurred | | | | | | | | |

From the comparison between Examples and Comparative Examples, it was confirmed that the decorative sheets of the present invention were excellent in color tone and appearance as well as adhesion, and exhibited a good weather resistance as compared to those of Comparative Examples.

## Claims

1. A decorative sheet comprising a substrate, an adhesive layer, a colored layer and a transparent resin layer, wherein the colored layer contains a high-luster pigment and a binder resin comprising a vinyl chloride/vinyl acetate copolymer and an acrylic resin, a mixing ratio of the vinyl chloride/vinyl acetate copolymer to the acrylic resin in the colored layer is from 5:5 to 7:3 (weight ratio), the transparent resin layer is made of an acrylic resin containing an ultraviolet absorber in an amount of 5% by weight or less on the basis of a whole weight of the transparent resin layer, the transparent resin layer has a thickness of 70 to 150 µm, a product of a content (wt%) of the ultraviolet absorber in the transparent resin layer and a thickness (µm) of the transparent resin layer is in the range of from 100 to 250 (wt%·µm), and the transparent resin layer has an ultraviolet transmittance of 8% or less as measured at 380 nm.

2. The decorative sheet according to claim 1, wherein the high-luster pigment contained in the colored layer is a scale-like aluminum filler having an average particle diameter of 5 µm or more, and a content of the high-luster pigment in the colored layer is from 10 to 40% by weight on the basis of a whole weight of the colored layer.

## Patentansprüche

1. Dekorative Folie, umfassend ein Substrat, eine Klebeschicht, eine gefärbte Schicht und eine transparente Harzschicht, wobei die gefärbte Schicht ein Hochglanz-Pigment und ein Binderharz enthält, welches ein Vinylchlorid/Vinylacetat-Copolymer und ein Acrylharz umfasst, wobei das Mischungsverhältnis des Vinylchlorid/Vinylacetat-Copolymeren zum Acrylharz in der gefärbten Schicht 5:5 bis 7:3 (Gewichtsverhältnis) beträgt, die transparente Harzschicht aus einem Acrylharz hergestellt ist, das einen Ultraviolett-Absorber in einer Menge von 5 Gew.-% oder weniger basierend auf dem Gesamtgewicht der transparenten Harzschicht enthält, die transparente Harzschicht eine Dicke von 70 bis 150 µm aufweist, das Produkt des Gehalts (Gew.-%) des Ultraviolett-Absorbers in der transparenten Harzschicht und der Dicke (µm) der transparenten Harzschicht im Bereich von 100 bis 250 (Gew.-% · µm) liegt, und die transparente Harzschicht eine Ultraviolett-Durchlässigkeit von 8% oder weniger gemessen bei 380 nm aufweist.

2. Dekorative Folie nach Anspruch 1, wobei das in der gefärbten Schicht enthaltene Hochglanz-Pigment ein schuppenartiger Aluminiumfüllstoff mit einem mittleren Partikeldurchmesser von 5 µm oder mehr ist, und der Gehalt an Hochglanz-Pigment in der gefärbten Schicht 10 bis 40 Gew.-% bezogen auf das Gesamtgewicht der gefärbten Schicht beträgt.

## Revendications

1. Feuille décorative, comprenant un substrat, une couche adhésive, une couche colorée et une couche de résine transparente, dans laquelle la couche colorée contient un pigment à haute brillance, et une résine liante comprenant un copolymère de chlorure de vinyle et d'acétate de vinyle, et une résine acrylique, le rapport de mélange du copolymère de chlorure de vinyle et d'acétate de vinyle à la résine acrylique dans la couche colorée étant de 5:5 à 7:3 (rapport pondéral), la couche de résine transparente étant faite d'une résine acrylique contenant un absorbant d'ultraviolet en une quantité de 5 % en poids ou moins par rapport au poids total de la couche de résine transparente, la couche de résine transparente ayant une épaisseur de 70 à 150 µm, le produit de la teneur (% en poids) de l'absorbant d'ultraviolet dans la couche de résine transparente et de l'épaisseur (µm) de la couche de résine transparente étant dans la plage de 100 à 250 (% en poids.µm), et la couche de résine transparente ayant une transmittance de l'ultraviolet de 8 % ou moins, mesurée à 380 nm.

2. La feuille décorative selon la revendication 1, dans laquelle le pigment à haute brillance contenu dans la couche colorée est une charge d'aluminium en paillettes ayant un diamètre particulaire moyen de 5 µm ou plus, et la teneur en le pigment à haute brillance dans la couche colorée est de 10 à 40 % en poids par rapport au poids total de la couche colorée.
